Europäisches Patentamt

**European Patent Office**

Office européen des brevets

(19)

(11) Numéro de publication: **0 074 904**

**B1**

(12) **FASCICULE DE BREVET EUROPEEN**

(45) Date de publication du fascicule du brevet: **28.01.87**

(51) Int. Cl.⁴: **G 06 F 11/26,** G 06 F 11/16

(21) Numéro de dépôt: **82401655.4**

(22) Date de dépôt: **10.09.82**

(54) **Automate de sécurité.**

(30) Priorité: **14.09.81 FR 8117338**

(43) Date de publication de la demande:
**23.03.83 Bulletin 83/12**

(45) Mention de la délivrance du brevet:
**28.01.87 Bulletin 87/05**

(84) Etats contractants désignés:
**AT BE CH DE GB IT LI LU NL SE**

(56) Documents cités:
**WO-A-81/01208**
**FR-A-2 245 020**
**GB-A-2 030 334**
**US-A-3 814 920**

**1979 IEEE TEST CONFERENCE, 23-25 octobre
1979, pages 112-120, Session 6, Digest of
Papers, Cherry Hill, New Jersey (USA);
R.M.SEDMAK: "Design for self-verification: an
approach for dealing with testability problems
in VLSI-based designs"**

(73) Titulaire: **SOCIETE D'ETUDES ET CONSEILS A E
R O (Automation.Electronique. Recherche
Opérationnelle)
3, avenue de l'Opéra
F-75001 Paris (FR)**

(72) Inventeur: **Fourre, Rémy
Chez M. Namias 11, Résidence Le Bois du Roi
F-91400 Les Ulis (FR)**
Inventeur: **de Langre, Bruno
34, rue Blomet
F-75015 Paris (FR)**

(74) Mandataire: **Chameroy, Claude et al
c/o Cabinet Malemont 42, avenue du Président
Wilson
F-75116 Paris (FR)**

(56) Documents cités:
**IBM TECHNICAL DISCLOSURE BULLETIN, vol.
20, no. 10, mars 1978, pages 4021-4022, New
York (USA); T.A.WILLIAMS: "Testing of LSI
logic circuits containing "IMBEDDED" shift
arrays"**

EP 0074904 B1

Courier Press, Leamington Spa, England.

# 0 074 904

**Description**

La présente invention concerne un automate de sécurité effectuant des calculs logiques et numériques sur des signaux binaires et comprenant deux sous-automatesidentiques constitués de registres et dispostifs combinatoires et opérant sur le même signal, et un moyen comparateur pour détecter les erreurs par comparaison des signaux provenant des deux sous-automates.

Plus. précisément l'invention, qui est definie dans la revendication 1, consiste en une disposition des dispositifs combinatoires et des registres de mémorisation de chacun des sous-automates qui permet de tester exhaustivement les registres et les tables de vérité des dispositifs combinatoires de chacun des sous-automates.

Afin de permettre une meilleure compréhension de l'invention, il convient au préalable de préciser quelques définitions:

— (Etat de) panne: modification définitive d'un composant qui ne lui permet plus d'assurer entièrement sa fonction nominale. Une panne d'un circuit combinatoire se traduit par une modification de sa table de vérité.

— Panne simple: occurrence d'une seule panne sur un seul composant physique de l'automate de sécurité (un registre ou un dispositif combinatoire réalisé en PROM, par exemple).

— Panne séquentielle: panne d'un dispositif combinatoire ou d'un registre par laquelle leurs signaux de sortie deviennent des fonctions combinatoires de plusieurs signaux d'entrée successifs. Une application de l'invention objet de la présente demande portera sur la détection de pannes séquentielles introduisant une dépendance sur deux entrées successives.

— Panne latente: panne qui n'a pas encore provoqué d'erreur, c'est-à-dire d'état binaire anormal d'une ligne de sortie du composant en panne.

— "Sécuritaire" ou de "sécurité": se dit d'un dispositif dans lequel toute erreur est détectée ou non dangereuse pour le système commandé.

— "Dynamisation" d'un composant: le fait de faire décrire tous les états binaires possibles aux fils d'entrée d'un composant pour en explorer toute la table de vérité.

Un automate "de sécurité" détecte la présence d'une erreur par comparaison des sorties de deux sous-automates. La détection n'est donc possible que si les deux sous-automates ne commettent pas simultanément la même erreur.

Or, si la panne d'un sous-automate reste latente pendant longtemps, la probabilité que le deuxième sous-automate soit affecté d'une panne provoquant la même erreur n'est pas négligeable.

Par conséquent, il est nécessaire de vérifier les tables de vérité des circuits logiques en imposant à ceux-ci tous les signaux d'entrée possibles de façon systématique, pour faire apparaître rapidement les modifications des tables de vérité.

La présente invention a donc pour objet un automate dans lequel les dispositifs combinatoires et les registres de chaque sous-automate opèrent périodiquement sur des lots de bits de test qui décrivent systématiquement tous les états logiques de leurs entrées.

A cette fin chacun des sous-automates a une structure bouclée, étant constituée de plusieurs blocs de registres et d'un à plusieurs blocs de dispositifs combinatoires, tels que chaque bloc de dispositifs combinatoires n'opère que sur un seul bloc de registres ou de dispositifs combinatoires, et que chaque bloc de registres ne soit alimenté que par un seul bloc de registres ou de dispositifs combinatoires.

Les registres et dispositifs combinatoires sont commandés par un même signal d'horloge qui provoque donc le décalage des contenus des blocs de registres, ces contenus pouvant être modifiés là ou un ou plusieurs blocs de dispositifs combinatoires sont intercalés entre deux blocs de registres successifs.

Un ou plusieurs dispositifs d'entrée permettent en outre de choisir, sur certains fils d'entrée de certains blocs de registres, ou de dispositifs combinatoires, entre le signal provenant du bloc précédent et un signal extérieur sur lequel doit opérer le sous-automate.

En raison de l'indépendence entre les ensembles de bits contenus dans les blocs de registres d'après la structure bouclée du sous-automate, il est possible de synchroniser les dispositifs d'entrée de façon que un ou plusieurs ensembles de bits circulent dans la boucle sans jamais être modifiés par les dispositifs d'entrée. Ces bits sont appelés bits de test.

Les functions réalisées par les dispositifs combinatoires et les liaisons entre dispositifs combinatoires et registres sont choisies de façon à permettre, d'une part de réaliser la fonction séquentielle désirée sur les signaux d'entrée, et d'autre part de dynamiser chaque dispositif combinatoire et chaque registre par les états successifs des bits de test.

Les valeurs initiales des bits de test sont identiques sur les deux sous-automates, et restent identiques en l'absence d'une panne sur un des sous-automates.

Un moyen comparateur opère entre les deux sous-automates. Ce moyen comparateur reçoit les signaux d'entrée des dispositifs combinatoires, ainsi éventuellement que des signaux prélevés en entrée de certains blocs de registres, et détecte toute erreur provoquée par une panne simple sur un des sous-automates, soit dans des bits de processus, soit pendant un pas de dynamisation, par des bits de test, du composant en panne.

**0 074 904**

Plus précisément, l'automate de sécurité selon l'invention est essentiellement caractérisé en ce que dans chacun des deux sous-automates identiques les registres d'une part et les dispositifs combinatoires d'autre part, sont disposés en parallèle à l'intérieur de plusieurs blocs de registres et de un ou plusieurs blocs de dispositifs combinatoires, chaque bloc de registres comprenant un ou plusieurs en parallèle, et chaque bloc de dispositifs combinatoires comprenant un ou plusieurs dispositifs combinatoires en parallèle, et en ce que ces blocs forment une boucle à décalage, chaque bloc de dispositifs combinatoires opérant sur un seul bloc de registres ou de dispositifs combinatoires, et chaque bloc de registres étant alimenté par un seul bloc de registres ou de dispositifs combinatoires, et les blocs recevant un même signal d'horloge, en ce que les blocs de registres constituant une boucle à décalage, les contenus des blocs de registres sont alors indépendants les uns des autres et en ce que les sorties de chaque bloc de dispositifs combinatoires sont permutées pour former les entrées des registres ou dispositifs combinatoires du bloc suivant, en ce que un ou plusieurs dispositifs d'entrée permettent de choisir, sur certains fils d'entrée de certains blocs de registres ou de dispositifs combinatoires, entre le signal provenant du bloc précédent et un signal extérieur sur lequel soit opérer le sous-automate, en ce que chaque dispositif d'entrée est synchronisé pour interdire l'entrée, pendant certains pas d'horloge, en ce que le sous-automate fonctionne par décalage synchrone entre les blocs de registres, les ensembles de bits ainsi transférés n'étant modifiés que par les entrées d'une part et par les dispositifs combinatoires et les permutations de fils d'autre part, en ce qu'un ensemble de bits au moins appelé ensemble de bits de test parcourt la boucle de sous-automate sans être modifié par le dispositif d'entrée, en ce que les fonctions respectives des dispositifs combinatoires et les permutations de fils de sortie de ceux-ci sont déterminées d'une part pour réaliser le processus désiré sur les signaux introduits par les dispositifs d'entrée, et d'autre part pour que le ou les ensembles de bits de test dynamisent tous les registres et dispositifs combinatoires en donnant successivement et cycliquement toutes les valeurs logiques possibles à leurs entrées respectives, en ce que les états logiques des deux sous-automates sont identiques en l'absence d'erreur, et en ce que les entrées des blocs de dispositifs combinatoires sont également envoyées au moyen comparateur de l'automate de sécurité, et en ce qu'ainsi toute panne simple d'un sous-automate ne peut rester latente et provoque nécessairement une erreur pour un des états des bits de test, toute erreur sur des bits de test ou de processus à l'intérieur du sous-automate étant détectable par le moyen comparateur.

Plusieurs formes d'exécution de l'invention sont décrites ci-après à titre d'exemples, en référence aux dessins annexés dans lesquels:

— la figure 1 illustre de façon schématique le principe de l'invention appliqué à deux blocs de registres et un bloc de dispositifs combinatoires;
— la figure 2 représente une application de l'invention à un filtre numérique;
— la figure 3 illustre le principe de l'invention appliqué à trois blocs de registres pour détecter les pannes séquentielles d'ordre 2; et
— la figure 4 illustre le principe de l'invention appliqué à un seul dispositif combinatoire et deux registres.

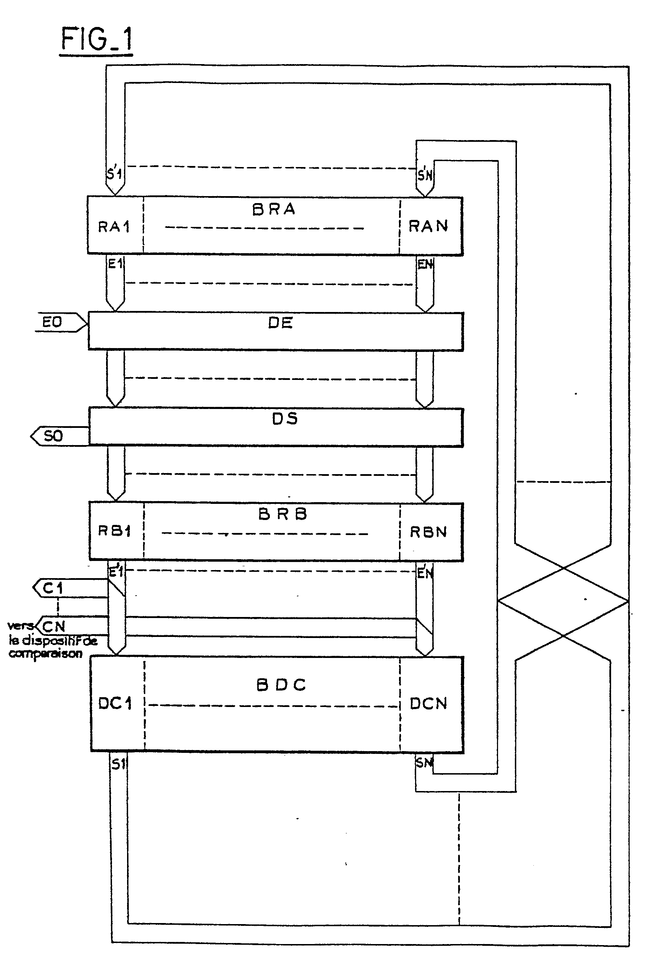

La figure 1 illustre le principe de l'invention, appliqué à un sous-automate comportant deux blocs BRA et BRB de N registres chacun, un bloc BDC de N dispositifs combinatoires DC1...DCN en parallèle, et des dispositifs d'entrée et de sortie DE et DS pourvus respectivement d'une entrée E0 et d'une sortie S0. Bien entendu, l'automate de sécurité complet comprend un deuxième sous-automate identique à celui représenté ici.

Les lots de fils de sortie respectifs S1...SN des dispositifs combinatoires DC1...DCN sont mixés pour former les lots de fils d'entrés respectifs S'1...S'N des registres RA1...RAN du premier bloc. S1 et S'1, S2 et S'2...SN et S'N ont respectivement le même nombre de fils.

Les lots de film E1...EN transmettent les contenus respectifs des registres RA1...RAN de BRA aux registres RB1...RBN de BRB.

Le dispositif d'entrée DE permet de choisir, sur certains fils des lots E1...EN, entre le signal provenant de BRA et un signal extérieur appliqué sur l'entrée E0 et constituant une entrée du processus.

Le dispositif de sortie DS permet de lire en S0 ceux des fils dans les lots E1...EN qui portent les résultats du processus.

Les lots de fils E'1 à E'N transmettent à DC1...DCN les contenus respectifs des registres RB1...RBN.

Les lots E'1...E'N vont également vers un dispositif non représenté de comparaison des signaux des deux sous-automates, par l'intermédiaire des lots de fils C1...CN.

Le sous-automate selon l'invention forme donc une boucle dans laquelle les dispositifs combinatoires DC1...DCN, qui peuvent être différents les uns des autres, exécutent des opérations logiques invariables sur deux ensembles de bits indépendants. Les contenus de BRA et BRB ne sont jamais combinés.

Cette propriété est utilisée pour faire opérer les registres et les dispositifs combinatoires alternativement sur des bits de processus et des bits de test.

Pendant un cycle d'horloge, soit BRA contient un ensemble de lots de bits de processus et BRB un ensemble de lots de bits de test, soit BRA contient un ensemble de lots de bits de test et BRB un ensemble de lots de bits de processus, et les contenus de BRA et BRB se décalent d'un cycle à l'autre.

Quand BRA contient les bits de processus, certains de ceux-ci sont lus et/ou modifiés en DS et DE, et les

3

lots sont chargés dans BRB, tandis que les bits de test contenus dans BRB sont traités dans DC1...DCN et les résultats chargés dans BRA.

Les dispositifs DE et DS fonctionnent un cycle d'horloge sur deux, quand BRA contient des bits de processus.

Ainsi, les dispositifs DC1...DCN et les blocs de registres BRA et BRB opèrent alternativement sur des lots de bits de test internes au sous-automate et sur des lots de bits de processus venant partiellement de l'extérieur par l'entrée E0 de DE.

La lecture de E'1...E'N par le dispositif de comparaison permet de détecter par comparaison avec l'autre sous-automate toute erreur combinatoire dans un dispositif combinatoire de BDC, toute erreur dans un registre de BRA ou BRB et toute écriture erronée ou désynchronisée en DE, pourvu que l'autre sous-automate ne soit pas en panne.

L'indépendance des lots de bits entre les cascades (RA1, RB1, DC1) (RA2, RB2, DC2),...(RAN, RBN, DCN) est un mode de réalisation préférentiel de l'invention qui permet d'améliorer la simplicité et la sécurité du dispositif de comparaison en minimisant le nombre de lots affectés par la panne d'un composant.

La décomposition de la fonction logique à réaliser en plusieurs sous-fonctions réparties entre DC1...DCN, et les transferts entre dispositifs combinatoires par recombinaison des fils entre S1...SN pour former S'1...S'N, permettent de réaliser des calculs complexes très rapidement (filtrage numérique en temps réel par exemple).

Le choix judicieux de la recombinaison des fils de S1...SN permet de rendre bijectifs les graphes $(E'1)\times(S'1)-(E'N)\times(S'N)$, bien que les graphes $(E'1)\times(S1):..(E'N)\times(SN)$ soient généralement surjectifs.

Cette bijectivité est nécessaire pour que les lots de bits de test puissent décrire successivement tous les états logiques des entrées des registres et des dispositifs combinatoires.

Ce choix avantageux des dispositifs DC1...DCN et des combinaisons de fils fait appel à des méthodes de calcul basées sur les réseaux de Pétri.

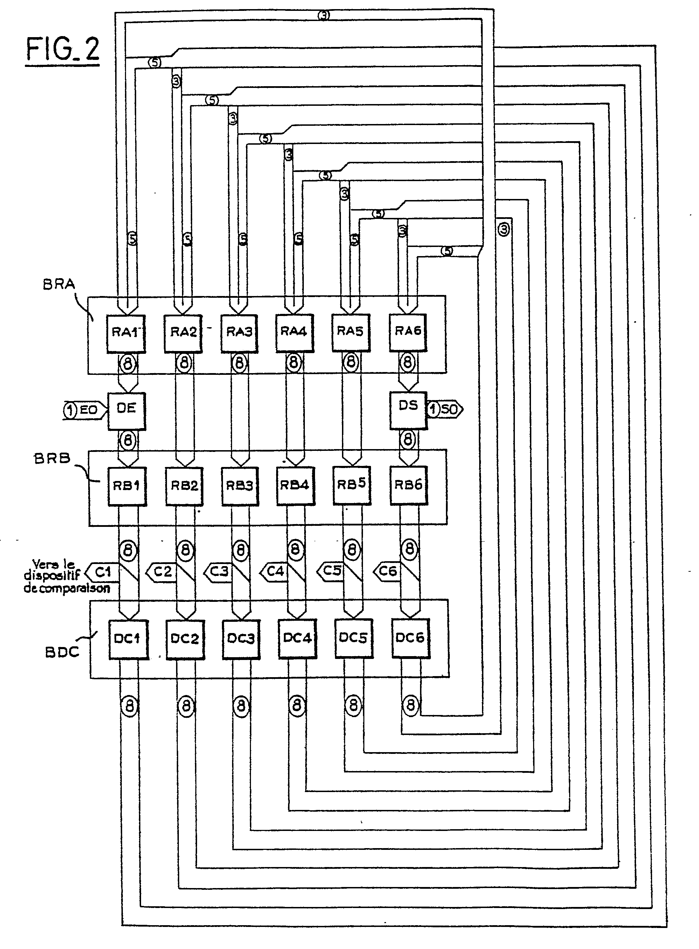

La figure 2 montre un exemple d'application pratique de l'invention à un filtre 2 000 Hz à modulation de fréquence, utilisable par exemple dans la technique de sécurité ferroviaire.

L'automate reçoit sur son entrée E0 un signal à 1 990 Hz ou 2 010 Hz échantillonné à 500 kHz.

Le signal E0 est considéré comme étant à 1 990 Hz quand l'automate compte 251 ou 252 mesures dans l'intervalle entre deux fronts montants consécutifs et à 2 010 Hz quand l'automate compte 248 ou 249 mesures dans l'intervalle entre deux fronts montants consécutifs.

La sortie S0 bascule vers le haut après trois intervalles consécutifs à 251 ou 252 mesures et vers le base après trois intervalles consécutifs à 248 ou 249 mesures. S0 reste collé à sa dernière valeur dans tout autre cas.

Chacun des deux sous-automates est constitué de deux blocs de 6 registres 8 bits BRA et BRB et d'un bloc de 6 dispositifs combinatoires 8 bits BDC. Un registre de BRA est lu par un seul registre de BRB et un registre de BRB est lu par un seul dispositif combinatoire de BDC.

Il y a donc 6 modules formés de deux registres et un dispositif combinatoire.

Chaque module(i) reçoit 8 lignes (entrées de RA (i) et rend 8 lignes (sorties de DC (i)).

Les cinq lignes de sortie de DC (i) de poids faibles sont réinjectées sur les cinq lignes de poids faibles à l'entrée du même module en RA (i).

Les trois lignes de sortie de DC (i) de poids forts sont injectées sur les trois lignes forts à l'entrée du module suivant en RA (i+1).

Les six modules sont disposés en anneaux, ce qui fait que les trois sorties de poids forts de DC6 sont réinjectées sur les trois entrées de poids forts de RA1.

E0 est recopié par DE sur la ligne de poids faible en entrée de RB1 quand BRA contient des bits processus qui sont lus par BRB.

S0 est lue par DS sur la ligne de poids faible du cinquième module quand BRA contient des bits de processus qui sont lus par BRB.

Les six dispositifs combinatoires DC1...DC6 sont des mémoires mortes dont les contenus sont listés, en hexadécimal, dans le tableau n° 1 ci-après.

Les valeurs initiales à charger dans le bloc de registres contenant initialement les bits de processus sont:

<div align="center">01, 00, 00, 00, 04, 00</div>

Les valeurs initiales à charger dans le bloc de registres contenant initialement les bits de test sont, par exemple:

<div align="center">40, 8A, 2C, 99, 64, 96</div>

Les valeurs successives prises par les bits de test sont listées dans le tableau n°2 ci-après. Chaque module reçoit les 256 valeurs possibles, ce qui teste les composants.

Un moyen de comparaison non représenté opère sur les 6 lots de 8 bits prélevés en C1 à C6 dans les deux sous-automates.

<div align="center">4</div>

# 0 074 904

La structure en modules indépendants permet de réaliser à partir de ces 6 lots, 11 lots contenant chacun un seul bit au plus erroné, ce qui facilite la réalisation d'un dispositif comparateur de sécurité employant un codage par parité des lots.

Le tableau n° 3 ci-dessous donne les bits constituant ces 11 lots.

TABLEAU N° 3

| | LOT N° | | | | | | | | | | |
|---|---|---|---|---|---|---|---|---|---|---|---|
| | 10 | 9 | 8 | 7 | 6 | 5 | 4 | 3 | 2 | 1 | 0 |
| MODULE N° 1 | 7 | | 6 | | 5 | | 4 | 3 | 2 | 1 | 0 |
| 2 | | 7 | | 6 | | 5 | 4 | 3 | 2 | 1 | 0 |
| 3 | 7 | | 6 | | 5 | | 4 | 3 | 2 | 1 | 0 |
| 4 | | 7 | | 6 | | 5 | 4 | 3 | 2 | 1 | 0 |
| 5 | 7 | | 6 | | 5 | | 4 | 3 | 2 | 1 | 0 |
| 6 | | 7 | | 6 | | 5 | 4 | 3 | 2 | 1 | 0 |

Cet exemple montre qu'il est effectivement possible de déterminer les fonctions combinatoires ayant les propriétés utilisées par l'invention dans le cas de processus d'une certaine complexité.

TABLEAU N° 1

| MODULE N° 1 | .0 | .1 | .2 | .3 | .4 | .5 | .6 | .7 | .8 | .9 | .A | .B | .C | .D | .E | .F |
|---|---|---|---|---|---|---|---|---|---|---|---|---|---|---|---|---|
| 0. | 07 | 09 | 07 | 09 | 61 | 09 | 4B | 4D | 61 | 4D | 4F | 51 | 61 | 51 | 13 | 15 |
| 1. | 61 | 15 | 37 | 39 | 63 | 39 | 3B | 3D | 63 | 3D | 03 | 05 | 63 | 05 | 00 | 00 |
| 2. | 00 | 00 | 02 | 02 | 02 | 02 | 04 | 04 | 04 | 04 | 05 | 05 | 06 | 06 | 06 | 06 |
| 3. | 07 | 07 | 08 | 28 | 28 | 28 | 29 | 2A | 2A | 2A | 2A | 2B | 2B | 2B | 2C | 2C |
| 4. | 2C | 2C | 2D | 2D | 2E | 2E | 2E | 2E | 2F | 2F | 2F | 30 | 30 | 50 | 50 | 51 |
| 5. | 51 | 52 | 52 | 52 | 52 | 53 | 53 | 53 | 54 | 54 | 54 | 54 | 55 | 55 | 56 | 56 |
| 6. | 56 | 56 | 57 | 57 | 57 | 58 | 58 | 78 | 78 | 79 | 79 | 7A | 7A | 7A | 7A | 7B |
| 7. | 7B | 7B | 7C | 7C | 7C | 7C | 7D | 7D | 7E | 7E | 7E | 7E | 7F | 7F | 7F | 7F |
| 8. | 85 | 86 | 89 | AA | 8D | DB | FD | 80 | A0 | C1 | E2 | C6 | 84 | CC | 90 | 81 |
| 9. | 88 | BD | AE | C3 | F7 | A8 | 87 | 90 | 91 | B5 | F7 | FB | CA | C5 | 89 | 8E |
| A. | F4 | B6 | B5 | CE | F8 | CB | DE | B0 | 81 | B3 | 87 | FF | A8 | A3 | C4 | C7 |
| B. | A9 | 8C | CF | 93 | 99 | C1 | AB | CF | B2 | D6 | 98 | 9C | FE | E7 | AB | AF |
| C. | ED | DA | D6 | AA | F9 | FC | FF | 92 | 85 | 95 | B8 | C0 | F1 | B9 | E5 | DC |
| D. | 8A | AD | D1 | B5 | BA | FD | DF | F2 | 93 | C3 | B9 | BD | 83 | C8 | CC | D0 |
| E. | EE | FE | F7 | EF | FA | CC | 80 | D4 | B4 | 97 | 82 | F8 | E2 | DB | A6 | F3 |
| F. | 8B | FF | F2 | D6 | DB | BE | FC | A2 | 94 | E4 | DA | A6 | A4 | A9 | ED | F1 |

5

**0 074 904**

TABLEAU N° 1 (suite)

| MODULE N° 2 | | .0 | .1 | .2 | .3 | .4 | .5 | .6 | .7 | .8 | .9 | .A | .B | .C | .D | .E | .F |
|---|---|---|---|---|---|---|---|---|---|---|---|---|---|---|---|---|---|
| | 0. | 00 | 00 | 00 | 01 | 04 | 04 | 06 | 06 | 08 | 08 | 0A | 0A | 0C | 0C | 01 | 02 |
| | 1. | 02 | 02 | 22 | 24 | 25 | 25 | 26 | 27 | 27 | 28 | 29 | 29 | 2A | 2B | 2B | 2C |
| | 2. | 03 | 03 | 03 | 25 | 05 | 27 | 07 | 29 | 09 | 2B | 0B | 2D | 2D | 23 | 2D | 2D |
| | 3. | 31 | 31 | 32 | 32 | 32 | 32 | 33 | 33 | 33 | 53 | 54 | 54 | 54 | 54 | 55 | 55 |
| | 4. | 00 | 01 | 01 | 55 | 04 | 55 | 06 | 56 | 08 | 56 | 0A | 56 | 4C | 56 | 57 | 57 |
| | 5. | 57 | 57 | 58 | 58 | 58 | 58 | 59 | 59 | 59 | 59 | 5A | 5A | 5A | 5A | 5B | 5B |
| | 6. | 6E | 6E | 6E | 6E | 6F | 6F | 6F | 6F | 70 | 70 | 70 | 70 | 71 | 71 | 7B | 7B |
| | 7. | 7C | 7C | 7C | 7C | 7D | 7D | 7D | 7D | 7E | 7E | 7E | 7E | 7F | 7F | 7F | 7F |
| | 8. | 92 | B5 | A9 | DB | 97 | AD | 83 | 94 | A2 | 92 | 93 | 8D | 9E | 94 | 9F | 86 |
| | 9. | 87 | CB | 9D | 90 | 81 | 81 | A4 | 81 | 85 | 87 | 9D | 9E | 8F | 96 | 9C | 87 |
| | A. | B3 | B9 | 8E | CF | BD | D3 | DB | F6 | B7 | A4 | 85 | A3 | D9 | A5 | B6 | AA |
| | B. | A8 | EC | A8 | E3 | C0 | 82 | A5 | A2 | A8 | AB | AB | BF | B0 | B7 | BE | A8 |
| | C. | D4 | DB | AF | F0 | DC | 95 | EE | D4 | D8 | F7 | F9 | BA | A7 | F9 | DA | CE |
| | D. | C9 | C0 | CC | 80 | E1 | FC | C6 | C3 | C9 | CC | CF | CD | DD | D8 | DF | C9 |
| | E. | B8 | ED | F0 | F1 | D1 | D2 | F3 | F5 | D6 | F8 | FA | 95 | FB | 92 | FE | FC |
| | F. | EA | E2 | B1 | A4 | CC | DF | E0 | E4 | EA | E6 | EB | EE | F1 | FA | E6 | EA |
| MODULE N° 3 | | .0 | .1 | .2 | .3 | .4 | .5 | .6 | .7 | .8 | .9 | .A | .B | .C | .D | .E | .F |
| | 0. | 00 | 00 | 00 | 01 | 04 | 04 | 06 | 06 | 08 | 08 | 0A | 0A | 0C | 0C | 01 | 02 |
| | 1. | 02 | 02 | 22 | 24 | 25 | 25 | 26 | 27 | 27 | 28 | 29 | 29 | 2A | 2B | 2B | 2C |
| | 2. | 03 | 03 | 03 | 25 | 05 | 27 | 07 | 29 | 09 | 2B | 0B | 2D | 2D | 23 | 2D | 2D |
| | 3. | 31 | 31 | 32 | 32 | 32 | 32 | 33 | 33 | 33 | 53 | 54 | 54 | 54 | 54 | 55 | 55 |
| | 4. | 00 | 01 | 01 | 55 | 04 | 55 | 06 | 56 | 08 | 56 | 0A | 56 | 4C | 56 | 57 | 57 |
| | 5. | 57 | 57 | 58 | 58 | 58 | 58 | 59 | 59 | 59 | 59 | 5A | 5A | 5A | 5A | 5B | 5B |
| | 6. | 6E | 6E | 6E | 6E | 6F | 6F | 6F | 6F | 70 | 70 | 70 | 70 | 71 | 71 | 7B | 7B |
| | 7. | 7C | 7C | 7C | 7C | 7D | 7D | 7D | 7D | 7E | 7E | 7E | 7E | 7F | 7F | 7F | 7F |
| | 8. | 92 | 90 | A5 | B5 | B7 | 9E | 81 | 8E | A7 | 9B | 9C | A0 | E9 | 9A | DF | BA |
| | 9. | 90 | A2 | A4 | B9 | 9D | 80 | 81 | AD | A1 | 87 | 8D | AE | 96 | 9D | 85 | 89 |
| | A. | B3 | F5 | E7 | 89 | 98 | AD | B9 | AF | 9D | C4 | C1 | C2 | EB | C3 | 96 | CA |
| | B. | BB | FA | C5 | F1 | A8 | A4 | A8 | CE | D0 | B3 | AB | EF | B7 | BE | A7 | BE |
| | C. | D4 | BF | E8 | 83 | AC | F1 | DB | 92 | DC | B4 | E4 | D6 | B7 | F9 | DA | EE |
| | D. | D1 | 92 | FB | C0 | CC | C5 | CA | E0 | F1 | D4 | CF | D4 | C6 | DF | C8 | CA |

6

TABLEAU N° 1 (suite)

|     | .0 | .1 | .2 | .3 | .4 | .5 | .6 | .7 | .8 | .9 | .A | .B | .C | .D | .E | .F |
|-----|----|----|----|----|----|----|----|----|----|----|----|----|----|----|----|----|
| E.  | FC | F9 | A9 | C6 | CA | EB | ED | D3 | D0 | D5 | 96 | F7 | D8 | F8 | FE | 8C |
| F.  | FC | B3 | 82 | E2 | 83 | E6 | 8C | 8F | 92 | E6 | EB | F5 | F8 | E3 | FD | FF |

MODULE N° 4

|     | .0 | .1 | .2 | .3 | .4 | .5 | .6 | .7 | .8 | .9 | .A | .B | .C | .D | .E | .F |
|-----|----|----|----|----|----|----|----|----|----|----|----|----|----|----|----|----|
| 0.  | 00 | 00 | 00 | 00 | 03 | 04 | 04 | 04 | 04 | 05 | 05 | 05 | 05 | 06 | 06 | 06 |
| 1.  | 06 | 07 | 07 | 07 | 07 | 08 | 08 | 08 | 28 | 29 | 29 | 29 | 29 | 2A | 2A | 2A |
| 2.  | 01 | 01 | 01 | 01 | 2A | 2B | 2B | 2B | 2B | 2C | 2C | 2C | 2C | 2D | 2D | 2D |
| 3.  | 2D | 2E | 2E | 2E | 2E | 2F | 2F | 2F | 2F | 30 | 30 | 50 | 50 | 51 | 51 | 51 |
| 4.  | 02 | 02 | 02 | 02 | 51 | 52 | 52 | 52 | 52 | 53 | 53 | 53 | 53 | 54 | 54 | 54 |
| 5.  | 54 | 55 | 55 | 55 | 55 | 56 | 56 | 56 | 56 | 57 | 57 | 57 | 57 | 58 | 78 | 78 |
| 6.  | 63 | 23 | 43 | 78 | 79 | 79 | 79 | 79 | 7A | 7A | 7A | 7A | 7B | 7B | 7B | 7B |
| 7.  | 7C | 7C | 7C | 7C | 7D | 7D | 7D | 7D | 7E | 7E | 7E | 7E | 7F | 7F | 7F | 7F |
| 8.  | B2 | 9E | BD | F6 | B8 | BD | E4 | E8 | 89 | D0 | 81 | EE | B2 | 81 | C2 | A3 |
| 9.  | BB | A3 | 80 | C1 | CE | B2 | A0 | 87 | 8E | 8D | 92 | D6 | 9A | C4 | 88 | 8A |
| A.  | 93 | EB | 88 | 97 | B9 | FF | C5 | A9 | AD | EC | A7 | AF | D4 | 83 | B6 | D7 |
| B.  | E0 | E8 | C4 | E9 | EF | D3 | C1 | AB | 8F | D1 | 93 | D7 | BB | E5 | A9 | BE |
| C.  | 94 | FA | EC | 9A | 9B | DC | A6 | D8 | F3 | D5 | CA | 90 | F6 | 83 | C4 | E5 |
| D.  | 80 | 82 | A5 | AC | F0 | F4 | E2 | CF | BF | CA | B4 | F8 | BD | A6 | DE | DF |
| E.  | 95 | EC | 91 | FE | DC | BC | C7 | CA | F9 | F7 | 8D | D1 | F8 | B9 | 9A | 9B |
| F.  | C2 | AB | C6 | CD | 91 | 95 | E6 | EB | B0 | EE | B5 | F9 | DC | C7 | FD | FF |

MODULE N° 5

|     | .0 | .1 | .2 | .3 | .4 | .5 | .6 | .7 | .8 | .9 | .A | .B | .C | .D | .E | .F |
|-----|----|----|----|----|----|----|----|----|----|----|----|----|----|----|----|----|
| 0.  | 00 | 01 | 02 | 03 | 04 | 03 | 04 | 07 | 04 | 07 | 04 | 07 | 0C | 07 | 0C | 0F |
| 1.  | 10 | 11 | 02 | 0F | 02 | 0F | 01 | 02 | 0A | 0D | 0F | 10 | 14 | 15 | 16 | 16 |
| 2.  | 2C | 33 | 2C | 33 | 2E | 33 | 2E | 33 | 2E | 35 | 2E | 35 | 30 | 35 | 30 | 31 |
| 3.  | 31 | 31 | 36 | 36 | 37 | 37 | 37 | 37 | 38 | 38 | 38 | 38 | 39 | 39 | 39 | 39 |
| 4.  | 40 | 40 | 40 | 41 | 52 | 41 | 52 | 43 | 52 | 43 | 52 | 45 | 54 | 45 | 54 | 45 |
| 5.  | 54 | 45 | 5A | 5A | 5A | 5A | 5B | 5B | 5B | 5B | 5C | 5C | 5C | 5C | 5D | 5D |
| 6.  | 66 | 69 | 66 | 69 | 66 | 69 | 66 | 69 | 68 | 6B | 68 | 6B | 68 | 6B | 68 | 6B |
| 7.  | 6A | 6D | 6A | 6D | 6A | 6D | 7D | 7D | 7E | 7E | 7E | 7E | 7F | 7F | 7F | 7F |
| 8.  | 80 | 93 | B4 | D5 | F7 | 80 | 8D | DB | 92 | AF | 9A | B3 | DA | 85 | D2 | A9 |
| 9.  | 99 | A1 | A0 | EF | F1 | 9D | A8 | DC | DD | C1 | F1 | F5 | 87 | 8E | 87 | 8A |
| A.  | 92 | 83 | A6 | 98 | B9 | CC | D0 | 9D | D4 | A6 | DD | F5 | FC | A1 | 94 | C3 |
| B.  | CD | DB | E5 | B1 | AB | 9F | 9A | FF | FB | C7 | 92 | B6 | AB | C5 | A8 | AB |

# 0 074 904

TABLEAU N° 1 (suite)

| | .0 | .1 | .2 | .3 | .4 | .5 | .6 | .7 | .8 | .9 | .A | .B | .C | .D | .E | .F |
|----|----|----|----|----|----|----|----|----|----|----|----|----|----|----|----|----|
| C. | A2 | C4 | E8 | 86 | FC | 8E | CA | DE | 96 | F1 | 83 | B7 | A2 | E2 | D6 | C7 |
| D. | E4 | FE | A0 | F3 | ED | F7 | A2 | 9B | 90 | EA | B3 | D7 | CF | E6 | DE | DF |
| E. | FE | AA | CB | C8 | BF | D0 | B6 | 81 | D8 | EE | EC | F9 | 90 | A4 | B8 | 89 |
| F. | FA | 85 | E9 | B5 | AF | D9 | CC | A3 | BC | EE | D4 | F8 | 84 | ED | E9 | EC |

| MODULE N° 6 | .0 | .1 | .2 | .3 | .4 | .5 | .6 | .7 | .8 | .9 | .A | .B | .C | .D | .E | .F |
|----|----|----|----|----|----|----|----|----|----|----|----|----|----|----|----|----|
| 0. | 00 | 01 | 01 | 01 | 01 | 02 | 02 | 02 | 02 | 03 | 03 | 03 | 03 | 04 | 04 | 04 |
| 1. | 04 | 05 | 05 | 05 | 05 | 06 | 06 | 06 | 06 | 07 | 07 | 07 | 07 | 28 | 28 | 28 |
| 2. | 00 | 28 | 29 | 29 | 29 | 29 | 2A | 2A | 2A | 2A | 2B | 2B | 2B | 2B | 2C | 2C |
| 3. | 2C | 2C | 2D | 2D | 2D | 2D | 2E | 2E | 2E | 2E | 2F | 2F | 2F | 2F | 50 | 50 |
| 4. | 00 | 50 | 50 | 51 | 51 | 51 | 51 | 52 | 52 | 52 | 52 | 53 | 53 | 53 | 53 | 54 |
| 5. | 54 | 54 | 54 | 55 | 55 | 55 | 55 | 56 | 56 | 56 | 56 | 57 | 57 | 57 | 57 | 78 |
| 6. | 00 | 78 | 78 | 78 | 79 | 79 | 79 | 79 | 7A | 7A | 7A | 7A | 7B | 7B | 7B | 7B |
| 7. | 7C | 7C | 7C | 7C | 7D | 7D | 7D | 7D | 7E | 7E | 7E | 7E | 7F | 7F | 7F | 7F |
| 8. | B2 | F3 | D8 | FD | E1 | C5 | E9 | 85 | 9F | D0 | F4 | 9D | B9 | FA | DB | D0 |
| 9. | 80 | A3 | 86 | C0 | AE | B2 | 84 | A7 | 8E | 8D | 92 | D6 | DA | E3 | A7 | AA |
| A. | F6 | D4 | D9 | 9F | C2 | E6 | CA | 89 | 88 | F1 | 95 | B8 | 81 | 82 | E3 | DC |
| B. | A2 | C0 | A0 | AB | CF | D3 | F6 | 8B | 86 | AF | B3 | F7 | 81 | 84 | C8 | CB |
| C. | FA | B5 | DB | 9E | E3 | C7 | EB | AD | 8C | B2 | D6 | D9 | BB | 9C | 9D | E1 |
| D. | C7 | E4 | E8 | CC | F0 | F4 | D7 | 8F | AA | D0 | 94 | 98 | BD | A5 | FE | FF |
| E. | FE | F7 | 9C | BC | E4 | A8 | EC | D1 | AF | D3 | 97 | FA | DE | BF | BB | AE |
| F. | 8A | A5 | A9 | ED | 91 | D5 | F8 | ED | AE | F1 | B5 | B9 | C2 | 86 | 89 | CC |

TABLEAU N° 2

| 40 | 8A | 2C | 99 | 64 | 96 | 3A | DB | 6E | F9 | 63 | AE | 79 | A1 | 06 | F2 | 47 | 9E | 13 | 97 | 4E | 83 | 22 | A4 |
|----|----|----|----|----|----|----|----|----|----|----|----|----|----|----|----|----|----|----|----|----|----|----|----|
| 8C | 33 | 8D | 2D | 86 | 64 | EA | 2D | DB | 6E | E9 | 63 | BE | 79 | A6 | 06 | C3 | 47 | D9 | 21 | 97 | 4E | EC | 22 |
| 64 | 92 | 3A | 8D | 2D | 99 | 62 | 83 | 34 | DB | 6E | F8 | 4B | BE | 79 | A4 | 06 | 92 | 23 | C3 | 0D | B4 | 50 | 89 |
| 97 | 5D | 94 | 41 | 95 | 2D | B7 | 5B | D2 | 38 | E8 | 6E | 90 | 3E | BE | 79 | A4 | 06 | C2 | 10 | EC | 0F | F4 | 50 |
| 30 | 9A | 5D | 82 | 1D | 8B | 6F | DA | 5B | EF | 38 | DB | 08 | 95 | 47 | BE | 79 | A2 | 56 | C2 | 18 | C6 | 0F | B4 |
| 87 | 1D | 9A | 5D | B5 | 1D | 9B | 6F | DA | 5B | 98 | 38 | C1 | 61 | 96 | 49 | BE | 79 | D3 | 4F | A7 | 26 | AF | 0F |
| 20 | 8B | 2D | 98 | 5F | B8 | 3B | FB | 6F | D7 | 5D | CE | 7A | CE | 61 | 93 | 48 | BE | 15 | B7 | 4F | AB | 23 | C4 |
| 80 | CD | 83 | 2E | 9D | 5F | 8B | 2E | FB | 6F | DC | 5D | DE | 7A | CE | 61 | D2 | 48 | F9 | 22 | B7 | 4F | B3 | 23 |
| 65 | 8C | 15 | AD | 2E | 98 | 46 | CD | 35 | FB | 6F | D7 | 4C | DE | 7A | C3 | 20 | B2 | 24 | E3 | 0E | D4 | 51 | A9 |

8

TABLEAU N° 2 (suite)

```
98 5E 85 23 90 2E    8E 39 F2 39 EB 6F    B0 3F DE 7A 8C 20    E2 11 E1 10 E5 51
31 9B 5E 81 19 8C    70 93 42 90 39 FB    09 B5 48 DE 7A C0    57 E2 19 E6 10 D4
A7 1E 9B 5E 8D 19    BB 70 81 1B B8 39    ED 42 88 1E DE 7A    F3 50 E8 27 D0 10
10 AB 2E B8 65 87    3C 9C 70 89 3B EE    7B C1 07 AA 3E DE    16 D7 50 CB 24 E4
81 63 AD 2F 89 65    AB 2F 9C 70 D8 3B    FE 7B C6 07 B9 3E    FB 23 D7 50 80 24
66 8E 63 CD 2F B9    3F ED 36 9C 70 8F    4D FE 7B C4 07 D0    26 A5 20 F4 52 C9
B8 5F 8E 63 91 2F    CC 32 93 3A 8A 70    D0 46 FE 7B 87 07    A4 13 C3 11 9A 52
32 BB 5F D8 61 AC    71 F2 39 B0 3A 9C    0A 86 1D FE 7B C2    58 E4 23 87 11 F4
88 1F BB 5F A9 61    DB 71 B3 40 F8 3A    CF 43 8B 3D FE 7B    94 51 C5 28 F1 11
60 AC 2F F8 66 B8    3D BC 71 E2 1C AF    7C D5 40 B1 49 FE    17 F7 51 EB 25 85
96 59 CD 30 A6 66    CB 30 BC 71 94 1C    9F 7C E0 08 E3 49    DD 24 F7 51 D3 25
67 99 59 ED 30 D9    00 D1 37 BC 71 E7    4E 9F 7C E4 08 D2    28 C5 0F 95 53 E9
D8 67 99 59 B1 30    C7 00 D3 3B AD 71    F0 47 9F 7C C4 08    C4 15 82 12 BA 53
33 8F 67 97 5B CC    72 80 00 D0 41 BC    0B 96 49 9F 7C E2    59 E5 25 A7 12 95
A8 26 8F 67 9C 5B    9C 72 80 00 80 41    91 44 B6 4A 9F 7C    B4 52 C7 29 A2 12
41 87 1A B9 67 97    4A DC 72 80 00 90    7D A4 08 B3 4A 9F    19 98 52 8C 26 A5
AC 34 89 31 C9 67    8F 3D DC 72 A0 00    BF 7D A8 09 F2 4A    FD 25 98 52 AE 26
68 B2 3B 8E 31 F9    01 94 46 DC 72 80    4F BF 7D 85 09 F2    29 A7 21 B5 54 8A
F8 68 B4 42 D1 31    A9 01 86 1D AA 72    B1 48 BF 7D A7 09    E4 16 E3 13 DA 54
34 90 68 A2 1E EC    73 A0 01 8A 3D DC    0C 88 1E BF 7D 83    5A E6 26 C7 13 B5
C8 27 90 68 96 1E    BC 73 A0 01 99 3D    E1 62 AB 3E BF 7D    D4 53 E7 18 CF 13
25 89 30 9A 68 A8    3E FC 73 A0 01 CF    7E EE 62 D1 4B BF    1A B8 53 C8 27 C5
82 12 91 32 88 68    EC 31 FC 73 81 01    DF 7E EE 62 85 4B    C3 08 B8 53 F3 27
69 82 22 AE 32 9A    02 F1 38 FC 73 81    50 DF 7E E3 40 93    2A A8 10 D5 55 AA
99 69 A3 16 B6 32    E7 02 F3 3C CD 73    D1 49 DF 7E E0 40    85 17 A2 14 FA 55
35 B0 69 88 1A 8D    74 C0 02 F0 42 FC    0D B6 4A DF 7E E0    5B C7 27 E7 14 D5
E8 28 B0 69 8F 1A    DC 74 C0 02 C0 42    F1 45 AA 1F DF 7E    F4 54 C9 2A C2 14
14 A9 1B BA 69 A7    43 9D 74 C0 02 B0    7F F5 41 CA 3F DF    1B D8 54 AC 28 E5
83 64 A9 33 8B 69    AD 36 9D 74 82 02    FF 7F C1 0A D9 3F    A5 09 D8 54 CE 28
6A AF 64 CE 33 BA    03 B3 3D 9D 74 A1    51 FF 7F A5 0A F0    2B C8 11 F5 56 CA
B9 6A AF 64 D6 33    C9 03 F4 44 CA 74    92 4A FF 7F E4 DA    C5 18 C2 15 9B 56
36 D0 6A D9 62 AD    75 81 03 91 43 9D    0E AA 1F FF 7F A3    5C E7 28 E8 15 F5
```

# 0 074 904

TABLEAU N° 2 (suite)

| 89 | 29 | D0 | 6A | C6 | 62 | | FC | 75 | A1 | 03 | A1 | 43 | | 93 | 05 | 8C | 3F | FF | 7F | | D5 | 55 | E9 | 19 | EF | 15 |
|----|----|----|----|----|----|----|----|----|----|----|----|----|----|----|----|----|----|----|----|----|----|----|----|----|----|----|
| 61 | CB | 31 | DA | 6A | D8 | | 44 | BD | 75 | E0 | 03 | 91 | | 63 | C4 | 09 | F1 | 4C | FF | | 1D | F8 | 55 | C9 | 29 | 86 |
| B6 | 5A | B1 | 34 | A8 | 6A | | AE | 37 | BD | 75 | 83 | 03 | | D7 | 5C | C8 | 0B | B4 | 4C | | E5 | 0A | F8 | 55 | D5 | 29 |
| 6B | BA | 5A | EE | 34 | DA | | 04 | D3 | 3E | BD | 75 | C1 | | 52 | FA | 5C | C5 | 0B | B3 | | 2C | CA | 12 | 96 | 57 | EA |
| 9A | 6B | BA | 5A | 97 | 34 | | A1 | 60 | 95 | 45 | ED | 75 | | B2 | 4B | FA | 5C | C7 | 0B | | 86 | 19 | E2 | 20 | BB | 57 |
| 37 | F0 | 6B | B7 | 5C | CD | | 76 | AE | 60 | 92 | 44 | BD | | 0F | D6 | 4B | F7 | 5E | C3 | | 5D | E8 | 29 | A1 | 16 | B6 |
| 8A | 2A | F0 | 6B | BC | 5C | | 9D | 76 | AE | 60 | 92 | 44 | | 95 | 06 | D6 | 4B | FD | 5E | | F5 | 56 | CB | 2B | E1 | 16 |
| 42 | EB | 1C | FA | 6B | B7 | | 45 | DD | 76 | 83 | 60 | B1 | | 48 | A6 | 0A | D3 | 4D | F7 | | 1E | B9 | 56 | CC | 2A | A6 |
| 8D | 35 | 8A | 35 | AB | 6B | | CE | 38 | DD | 76 | E6 | 60 | | EF | 3B | CA | 0C | A5 | 4D | | C0 | 0B | B9 | 56 | EE | 2A |
| 6C | D2 | 3C | 8F | 35 | FA | | 05 | F3 | 3F | DD | 76 | A0 | | 53 | F4 | 44 | E5 | 0C | D3 | | 2D | EA | 13 | B6 | 58 | AB |
| BA | 6C | D4 | 43 | B7 | 35 | | E9 | 04 | B5 | 46 | BD | 76 | | D2 | 4C | C4 | 1C | AC | 0C | | A6 | 1A | E4 | 21 | DB | 58 |
| 38 | 91 | 6C | C2 | 1F | ED | | 77 | 84 | 04 | B2 | 45 | DD | | 11 | CC | 4C | A9 | 3C | E3 | | 5E | C9 | 2A | C1 | 17 | D6 |
| AA | 25 | D1 | 6C | F6 | 1F | | BD | 77 | 84 | 04 | C1 | 45 | | B5 | 07 | AC | 4C | F9 | 3C | | D6 | 57 | EB | 1A | E2 | 17 |
| 27 | 85 | 32 | 9B | 6C | C8 | | 47 | FD | 77 | A3 | 04 | D1 | | 21 | C6 | 0B | F3 | 4E | EF | | 1F | D9 | 57 | E9 | 2B | C6 |
| 84 | 14 | 92 | 36 | C8 | 6C | | EE | 3A | FD | 77 | 84 | 04 | | A0 | 0E | EA | 0D | D4 | 4E | | E0 | 0C | D9 | 57 | F5 | 2B |
| 6D | 85 | 24 | AF | 36 | 9B | | 06 | B4 | 43 | FD | 77 | E1 | | 54 | E1 | 16 | 86 | 0D | F3 | | 2E | EC | 14 | D6 | 59 | CB |
| DA | 60 | A5 | 17 | D7 | 36 | | EB | 40 | D5 | 46 | DD | 77 | | F2 | 4D | E6 | 24 | E7 | 0D | | C6 | 1B | E5 | 22 | FB | 59 |
| 39 | B1 | 6D | A8 | 1B | BE | | 78 | E0 | 05 | D2 | 46 | FD | | 12 | F6 | 4D | EA | 21 | 84 | | 5F | E9 | 2B | E1 | 18 | F6 |
| CA | 2C | F1 | 6D | B0 | 18 | | 9E | 78 | A4 | 05 | B2 | 46 | | F7 | 20 | F6 | 4D | 93 | 21 | | F6 | 58 | ED | 2C | EA | 18 |
| 18 | AD | 33 | BB | 60 | C7 | | 49 | 9E | 78 | 84 | 05 | F1 | | 22 | A3 | 0C | 94 | 4F | E8 | | 1C | F9 | 58 | EC | 2C | E6 |
| A3 | 65 | B2 | 37 | CB | 6D | | AF | 3C | 9E | 75 | A3 | 05 | | A2 | 0F | CC | 0E | C5 | 4F | | E3 | 66 | F9 | 58 | F0 | 2C |
| 6E | CF | 65 | CF | 37 | B8 | | 37 | D4 | 45 | 9E | 78 | 82 | | 55 | A2 | 17 | A6 | 0E | 94 | | 2F | EF | 66 | F6 | 5A | EB |
| FA | 6E | CF | 65 | F7 | 37 | | C5 | 41 | F5 | 48 | 9E | 78 | | B3 | 4E | 87 | 25 | CC | 0E | | E6 | 1C | EF | 66 | FC | 5A |

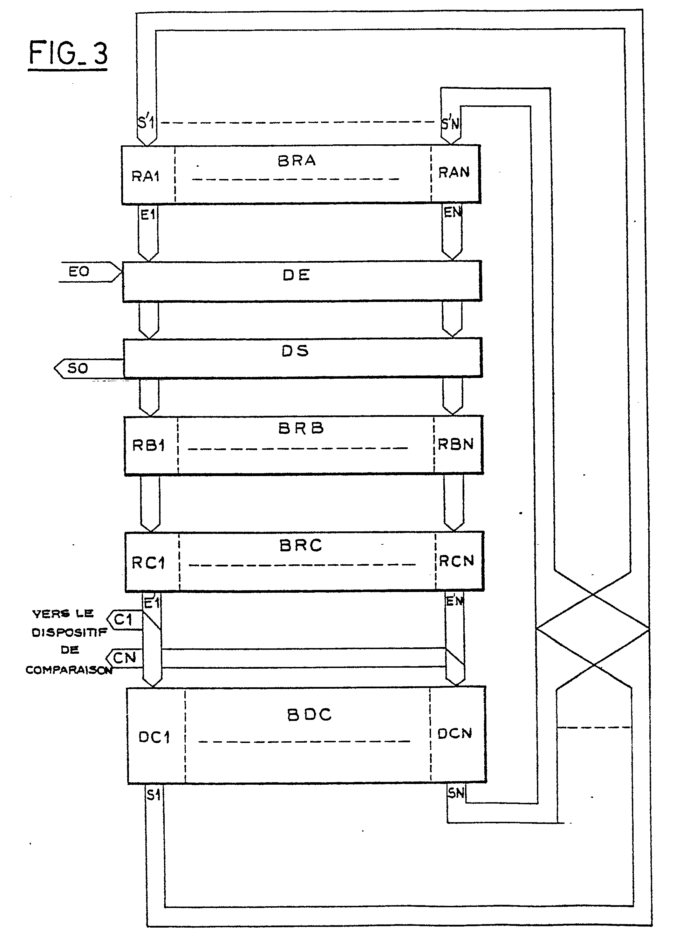

La figure 3 montre un exemple d'application comportant trois blocs de registres et un bloc de dispositifs combinatoires.

Au début de chaque pas d'horloge, deux des blocs de registres contiennent des bits de test et ces bits de test forment donc deux ensembles totalement indépendants parcourant la boucle BRA-BRB-BRC-BDC-BRA, le troisième ensemble étant constitué de bits de processus.

Le dispositif d'entrée DE ne permet l'entrée de données que pendant un pas d'horloge sur trois, quand BRA contient des bits de processus.

La propriété avantageuse réside dans la réalisation d'un test des pannes séquentielles des registres et dispositifs combinatoires.

Les fonctions combinatoires et les liaisons entre BDC et BRA sont choisies de façon à permettre à chacun des ensembles de bits de test de dynamiser les registres et dispositifs combinatoires, l'une des dynamisations étant partiellement redondante de façon que les nombres respectifs P1 et P2 de pas d'horloge de ces dynamisations soient premiers entre eux.

Alors les successions de valeurs binaires prises par les deux ensembles de bits de test couvriront toutes les successions de deux lots binaires possibles pour chaque registre et dispositif combinatoire en au plus $P1 \times P2$ pas d'horloge de processus.

10

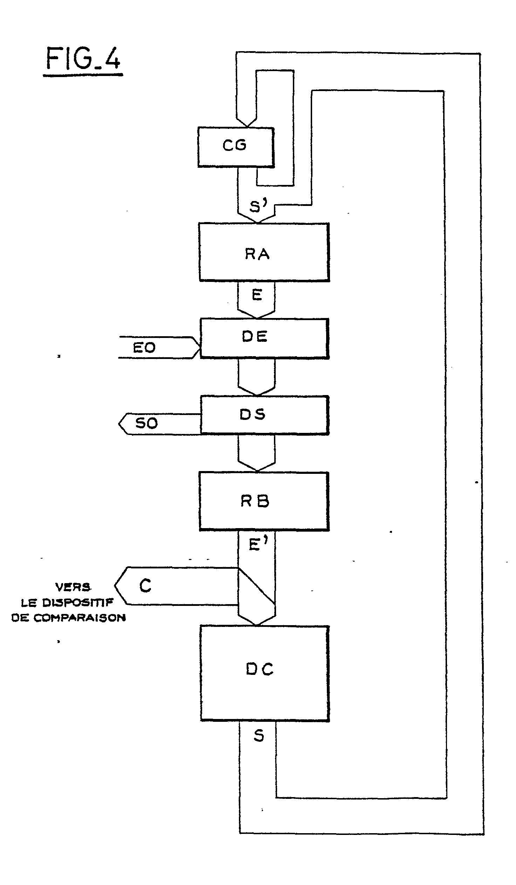

La figure 4 montre une autre application de l'invention comportant un seul dispositif combinatoire N et deux registres RA et RB.

Dans ce cas, il n'est plus possible de rendre le graphe (E')×(S') bijectif par croisement des fils de S.

On utilise ici un dispositif de correction CG permettant de forcer, toujours de la même façon, certains fils de S de façon à rendre le graphe (E')×(S') bijectif. La méthode des réseaux de Pétri permet de déterminer ces fils tant que la fonction combinatoire n'est pas trop surjective.

CG est synchronisé avec le passage du lot de bits de test, et ne modifie pas ce lot de bits.

**Revendications**

1. Automate de sécurité effectuant des calculs logiques et numériques sur des signaux binaires et comprenant deux sous-automates identiques constitués de registres (R1...RN) et dispositifs combinatoires (DC) et opérant sur le même signal, et un moyen comparateur pour détecter les erreurs par comparaison des signaux provenant des deux sous-automates, caractérisé en ce que dans chacun des deux sous-automates identiques les registres (R1...RN) d'une part, et les dispositifs combinatoires (DC) d'autre part, sont disposés en parallèle à l'intérieur de plusieurs blocs de registres (BRA, BRB,...) et d'un ou plusieurs blocs de dispositifs combinatoires (BDC), chaque bloc de registres comprenant un ou plusieurs en parallèle, et chaque bloc de dispositifs combinatoires comprenant un ou plusieurs dispositifs combinatoires en parallèle, et en ce que ces blocs forment une boucle à décalage, chaque bloc de dispositifs combinatoires (BDC) opérant sur un seul bloc de registres ou de dispositifs combinatoires, et chaque bloc de registres (BRA, BRB...) étant alimenté par un seul bloc de registres ou de dispositifs combinatoires, et les blocs recevant un même signal d'horloge, en ce que les blocs de registres constituant une boucle à décalage, les contenus des blocs de registres sont alors indépendants les uns des autres et en ce que les sorties de chaque bloc de dispositifs combinatoires sont permutées pour former les entrées des registres ou dispositifs combinatoires du bloc suivant, en ce que un ou plusieurs dispositifs d'entrée (DE) permettent de choisir, sur certains fils d'entrée de certains blocs de registres ou de dispositifs combinatoires, entre le signal provenant du bloc précédent et un signal extérieur (E0) sur lequel doit opérer le sous-automate, en ce que chaque dispositif d'entrée (DE) est synchronisé pour interdire l'entrée, pendant certains pas d'horloge, en ce que le sous-automate fonctionne par décalage synchrone entre les blocs de registres, les ensembles de bits ainsi transférés n'étant modifiés que par les entrées d'une part et par les dispositifs combinatoires et les permutations de fils d'autre part, en ce qu'un ensemble de bits au moins appelé ensemble de bits de test parcourt la boucle de sous-automate sans être modifié par le dispositif d'entrée, en ce que les fonctions respectives des dispositifs combinatoires et les permutations de fils en sortie de ceux-ci sont déterminées d'une part pour réaliser le processus désiré sur les signaux introduits par les dispositifs d'entrée, et d'autre part pour que le ou les ensembles de bits de test dynamisent tous les registres et dispositifs combinatoires en donnant successivement et cycliquement toutes les valeurs logiques possibles à leurs entrées respectives, en ce que les états logiques des deux sous-automates sont identiques en l'absence d'erreur, et en ce que les entrées des blocs de dispositifs combinatoires sont également envoyées au moyen comparateur de l'automate de sécurité, et en ce qu'ainsi toute panne simple d'un sous-automate ne peut rester latente et provoque nécessairement une erreur par un des états des bits de test, toute erreur sur des bits de test ou de processus à l'intérieur du sous-automate étant détectable par le moyen comparateur.

2. Automate selon la revendication 1, caractérisé en ce que chaque sous-automate comprend deux blocs de registres (BRA et BRB), un bloc de dispositifs combinatoires (BDC) et un dispositif d'entrée (DE) synchronisé pour permettre l'introduction de données un pas d'horloge sur deux, chaque bloc de registres contenant ainsi alternativement un ensemble de bits de processus dépendant des entrées et un ensemble de bits de test, le bloc de dispositifs combinatoires (BDC) opérant alternativement sur un ensemble de bits de processus et sur un ensemble de bits de test.

3. Automate selon la revendication 1, caractérisé en ce que chaque sous-automate comprend trois blocs de registres (BRA, BRB et BRC), un bloc de dispositifs combinatoires (BDC), et un dispositif d'entrée (DE) synchronisé pour permettre l'introduction de données un pas d'horloge sur trois, la boucle du sous-automate contenant ainsi deux ensembles indépendants de bits de test, le bloc de dispositifs combinatoires (BDC) opérant successivement sur un ensemble de bits de processus et sur deux ensembles successifs de bits de test, et en ce que les nombres de pas d'horloge respectifs des deux cycles de dynamisation par ces deux ensembles de bits de test sont premiers entre eux, chaque registre (RAi, RBi, RCi) ou dispositif combinatoire (DCi) recevant alors cycliquement toutes les combinaisons de deux entrées successives, et toute panne séquentielle combinant deux entrées successives d'un registre ou dispositif combinatoire produisant nécessairement une erreur et ne pouvant rester latente.

4. Automate selon la revendication 2, caractérisé en ce que chaque sous-automate ne comporte qu'un dispositif combinatoire (DC) et deux registres (RA, RB) et en ce qu'un dispositif de correction (CG) permet de forcer systématiquement l'état de certains fils de sortie du dispositif combinatoire (DC) quand celui-ci opère sur le lot de bits de test, ce dispositif de correction (CG) permettant de rendre ainsi bijective la fonction combinatoire (DC) de faire décrire tous les états binaires par le lot de bits de test.

## 0 074 904

**Patentansprüche**

1. Sicherheitsautomat zur Durchführung von logischen und numerischen Rechenvorgängen mit Binärsignalen, bestehend aus zwei gleichartigen Unterautomaten, gebildet aus Registern (R1...RN) und Schaltvorrichtungen (DC), auf die dasselbe Signal wirkt, ferner aus einem Vergleichswerk zum Nachweis der Fehler (Abweichungen) durch Vergleich der aus den beiden Unterautomaten kommenden Signale, dadurch gekennzeichnet, daß in jedem der beiden gleichen Unterautomaten die Register (R1...RN) einerseits und die Schaltwerke (DC) andererseits, zum Eingang mehrerer Registerblöcke (BRA...BRB...) und eines oder mehrere Blöcke von Vergleichswerken (BDS) parallelgeschaltet sind, wobei jeder Registerblock eines oder mehrere in Parallelschaltung und jeder Block von Schaltwerken und jeder Block von Schaltwerken ein oder mehrere Schaltwerke in Parallelschaltung enthält, und

— daß diese Blöcke eine Verzögerungsschleife bilden, wobei jeder Block von Schaltwerken (BDC) auf einen einzigen Register- oder Schaltwerkblock wirkt, und jeder Registerblock (BRA...BRB...) durch einen einzigen Registerblock oder Schaltwerkblock gespeist wird und die Blocke ein gleiches Taktsignal empfangen, und

— daß die Registerblöcke eine Verzögerungsschleife bilden, wobei dann die Inhalte der Registerblöcke voneinander unabhangig werden und

— daß die Ausgänge jedes Blockes von Schaltwerken vertauscht sind, um die Eingänge der Register oder Schaltwerke des folgenden Blockes zu bilden,

— daß ein oder mehrere Eingangsvorrichtungen (DE) auf bestimmten Eingansleitern von bestimmten Registerblöcken oder Schaltwerken zwischen dem aus dem vorhergehenden Block herkommenden und einem äußeren Signal (E0) auf das der Unterautomat wirken soll, zu wählen gestattet, und

— daß jede Eingangsvorrichtung (DE) synchronisiert wird, um den Eingang während betimmter Taktschritte zu sperren,

— daß der Unterautomat durch Synchronverschiebung zwischen den Registerblöcken wirkt, wobei die so übertragenen Bitgruppen nur durch die Eingänge einerseits und durch die Schaltwerke und die Leitervertauschungen anderseits verändert werden,

— daß eine als Testbitgruppe bezeichnete Bitgruppe die Unterautomatenschleife ohne Veränderung durch die Eingangsvorrichtung durchläuft,

— daß die jeweiligen Funktionen der Schaltwerke und die Vertauschungen der Ausgangsleiter derselben einerseits bestimmt sind, um den gewünschten Vorgang auf die durch die Eingangsvorrichtungen zugeführten Signale auszulösen, und andererseits die Testbitgruppe oder -gruppen alle Register und Schaltwerke dynamisieren, indem sie fortlaufend und zyklisch alle möglichen logischen Werte auf ihre zugehörigen Eingänge geben,

— daß die logischen Zustände der beiden Unterautomaten bei Fehlen eines Fehles gleich sind, und

— daß die Eingänge der Schaltwerkblöcke gleicherweise dem Vergleichswerk des Sicherheitsautomaten zugeführt werden und

— daß so jeder einfache Fehler eines Unterautomaten nicht gespeichert wird und damit notwendigerweise einen Fehler durch einen der Zustände des Testbits hervorrufen kann, wobei jeder Fehlereinfluß auf Testbits oder Prozeßbits im Innern des Unterautomaten durch das Vergleichswerk feststellbar ist.

2. Automat nach Anspruch 1, dadurch gekennzeichnet, daß jeder Unterautomat zwei Registerblöcke (BRA und BRB), einen Bock von Schaltwerken (BDC) und eine synchronisierte Eingangsvorrichtung aufweist, um die Dateneingabe mit einem doppelten Taktschritt zu ermöglichen, wobei jeder Registerblock so alternativ eine Prozeßbitgruppe enthält, die von den Eingängen und einer Testbitgruppe abhängig ist, während der Block von Schaltwerken (BDC) alternativ (abwechselnd) auf eine Prozeßbitgruppe und auf eine Testbitgruppe wirkt.

3. Automat nach Anspruch 1, dadurch gekennzeichnet, daß jeder Unterautomat drei Registerblöcke (BRA, BRB und BRC), einen Blöck von Schaltwerken (BDC) und eine synchronisierte Eingangsvorrichtung enthält, um die Dateneingabe mit einem verdreifachten Taktschritt zu ermöglichen, wobei die Unterautomatenschleife zwei selbständige Testbitgruppen enthält, während der Block von Schaltwerken (BDC) nacheinander auf eine Prozeßbitgruppe und auf zwei darauf folgende Testbitgruppen wirkt, und daß die Zahlen der jeweiligen Taktschritte der beiden Dynamisierungszyklen durch diese beiden Testbitgruppen unter sich primär sind, und daß jedes Register (RAi, RBi, RCi) oder Schaltwerk (CDi) zyklisch alle Kombinationen von zwei aufeinanderfolgenden Eingängen empfängt und daß jeder sequentielle Fehler aus zwei aueinanderfolgenden Eingängen eines Registers oder Schaltwerkes herrührt, notwendigerweise einen Fehler produziert und nicht latent bleiben kann.

4. Automat nach Anspruch 2, dadurch gekennzeichnet, daß jeder Unterautomat nur ein Schaltwerk (DC) und zwei Register (RA, RB) enthält und daß eine Korrekturvorrichtung (CG) systematisch den Zustand bestimmter Ausgangsleiter des Schaltwerkes (DC) erzwingt, wenn dieser auf den Satz von Testbits wirkt, wobei diese Korrekturvorrichtung (CG) die Schaltefunktion (DC) zweifach wertig macht, um alle Binärzustände durch den Satz von Testbits beschreiben zu lassen.

**0 074 904**

## Claims

1. A safety controller performing logic and digital computations on binary signals and including two identical sub-controllers comprising registers (R1...RN) and combinational devices (DC) and operating on the same signal, and a comparator means for detecting the errors by comparing the output signals from the two sub-controllers, characterized in that, in each of the two identical sub-controllers, the registers (R1...RN), on the one hand, and the combinational devices (DC), on the other hand, are disposed in parallel within several blocks of registers (BRA, BRB,...) and within one or more blocks of combinational devices (BDC), each block of registers consisting of one or more registers in parallel, and each block of combinational devices consisting of one or more combinational devices in parallel, and in that such blocks form a shifting loop, each block of combinational devices (BDC) operating only on one block of registers or of combinational devices, and each block of registers (BRA, BRB,...) being fed from only one block of registers or of combinational devices, and the blocks receiving a same clock signal, in that the blocks of registers forming a shifting loop, the contents of the blocks of registers are then independent of one another and in that the outputs from each block of combinational devices are shifted to form the inputs of the registers or combinational devices of the next block, in that one or more input devices (DE) provide for selecting, on certain input wires of certain blocks of registers or of combinational devices, between the signal from the preceding block and an outside signal (EO) on which the sub-controller must operate, in that each input device (DE) is synchronized to inhibit input, during certain clock steps, in that the sub-controller operates by synchronous shifting between the blocks of registers, the sets of bits thus transferred being modified only by the inputs, on the one hand, and by the combinational devices and the wire shifts, on the other hand, in that at least one set of bits called set of test bits circulates in the sub-controller loop without being modified by the input device, in that the respective functions of the combinational devices and the wire shifts at the output of same are selected so that, firstly, it is possible to achieve the desired process on the input signals from the input devices and, secondly, the set(s) of test bits dynamize(s) all of the registers and combinational devices by providing successively and cyclically every possible logic value at their respective inputs, in that the logic states of the two sub-controllers are identical in the absence of error, and in that the inputs of the blocks of combinational devices are also transmitted to the comparator means of the safety controller, and in that any single fault of one sub-controller thus cannot remain latent and causes necessarily an error by one of the states of the test bits, any error on test bits or process bits within the sub-controller being detectable by the comparator means.

2. The safety controller according to claim 1, characterized in that each sub-controller comprises two blocks of registers (BRA and BRB), one block of combinational devices (BDC) and one input device (DE) synchronized to allow input of data every two clock steps, whereby each block of registers contains alternately one set of process bits dependent on the inputs and one set of test bits, the block of combinational devices (BDC) operating alternately on one set of process bits and on one set of test bits.

3. The safety controller according to claim 1, characterized in that each sub-controller comprises three blocks of registers (BRA, BRB and BRC), one block of combinational devices (BDC), and one input device (DE) synchronized to allow input of data during one clock step out of three, whereby the loop of the sub-controller contains two independent sets of test bits, the block of combinational devices (BDC) operating successively on one set of process bits and on two successive sets of test bits, and in that the respective numbers of clock steps of the two cycles of dynamization by said two sets of test bits are prime between them, whereby each register (RAi, RBi, RCi) or combinational device (DCi) then receives cyclically all of the combinations of two successive inputs, and any sequential fault combining two successive inputs of one register or combinational device causes necessarily an error and cannot remain latent.

4. The safety controller according to claim 2, characterized in that each sub-controller comprises only one combinational device (DC) and two registers (RA, RB) and in that a correction device (CG) makes it possible to force systematically the state of certain output wires from the combinational device (DC) when the latter operates on the batch of test bits, whereby such correction device (CG) allows to render the combinational function (DC) bijective and to have all of the binary states described by the batch of test bits.

13

## FIG_1

FIG_2

# FIG_3

**0 074 904**

# FIG.4

4